# EUROPEAN PATENT SPECIFICATION

(11) **EP 3 532 374 B1**
(45) Date of publication and mention of the grant of the patent: **23.06.2021**
(21) Application number: 17797275.9
(22) Date of filing: 26.10.2017
(51) Int. Cl.: B63C 9/23, B64D 25/14

(54) **EVACUATION SYSTEM**
EVAKUIERUNGSSYSTEM
SYSTÈME D'ÉVACUATION

(30) Priority: 26.10.2016 GB 201618108
(43) Date of publication of application: 04.09.2019
(73) Proprietor: Survitec Group Limited, Birkenhead Merseyside CH41 1HQ (GB)
(72) Inventor: BOYER, Maxime, 17210 Chevanceaux (FR); GREGORY, Stewart, Birkenhead Merseyside CH41 1HQ (GB); MCLEAN, Iain, Lurgan BT66 7BJ (GB); MICHAUD, Pascal, 17210 Chevanceaux (FR)
(74) Representative: Foster, Mark Charles
(86) International application number: PCT/EP2017/077502
(87) International publication number: WO 2018/078041

(56) References cited:
- WO-A1-95/15787
- WO-A1-2009/026631
- US-A1- 2014 196 986

## Description

### TECHNICAL FIELD

The present invention relates to an inflatable evacuation slide for evacuating people from a first structure to a second structure. The slide comprises at least three longitudinal beams, including two lateral lower beams and an upper beam, spaced apart transversally over their length and substantially parallel to each other in the inflated state, each beam comprising at least one inflatable longitudinal tube.

### BACKGROUND TO THE INVENTION

EP2440446 (Survitec SAS) discloses an inflatable evacuation slide for evacuating people from a ship to at least one inflatable rescue liferaft. The slide includes three longitudinal beams each including three inflatable tubes braced by inflatable tubes of side and lower struts arranged as closed stiffening inflatable frames having a polygon shape in the inflated state and surrounding the longitudinal beams to which the tubes of the stiffening frames are connected by connection means and inflation means.

WO2009/026631 discloses an inflatable evacuation slide for evacuating people from a first structure to a second structure, the slide comprising: at least three longitudinal beams, including two lateral lower beams and an upper beam, spaced apart transversally over their length and substantially parallel to each other in the inflated state, each beam comprising at least one inflatable longitudinal tubes; and a plurality of inflatable lateral tubes connected to said upper beam and to said lateral lower beams. The inflatable tubes are manufactured from a polyurethane coated nylon fabric.

Embodiments of the present invention seek to provide an inflatable evacuation slide with improved rigidity.

### SUMMARY OF THE INVENTION

According to a first aspect of the invention, there is provided an inflatable evacuation slide for evacuating people from a first structure to a second structure, the slide comprising:
at least three longitudinal beams, including two lateral lower beams and an upper beam, spaced apart transversally over their length and substantially parallel to each other in the inflated state, each beam comprising at least one inflatable longitudinal tubes; and
a plurality of inflatable lateral panels connected to said upper beam and to said lateral lower beams;
wherein the inflatable lateral panels comprise drop stitch material.

The first structure may be a ship or other vessel.

The second structure may be one or more structures, platforms, life rafts, e.g. an inflatable life raft, lifeboats etc. The second structure may be inflatable.

The inflatable longitudinal tubes may comprise a braid tube.

The braid tube may be formed of a plurality of substantially inelastic fibres. In the embodiment, this provides the tubes with the ability to withstand high inflation pressures, such as 100psi. The braid tube may include at least one longitudinally extending element for constraining the maximum longitudinal extension of the braid tube.

The inflatable longitudinal tubes may comprise an inflatable bladder, the volume of which is constrained by the braid tube. The braid tube may take up the tension caused by inflation of the bladder. This is advantageous as the braid tube may be stronger than the bladder.

The braid tube may be contained in a sleeve suitable for being adhesively connected to the inflatable lateral panels. Braid material is generally unsuitable for reliable attachment by adhesive. The sleeve allows the tube to be adhered to the panels. The sleeve may also protect the braid material from damage to handling or water.

The inflatable lateral panels comprise drop stitch material. Such a material maintains its shape under high inflation pressures and provides substantially rigid surfaces.

Some or all of the inflatable longitudinal tubes may include at least one end plate positioned at an end of the tube. In the embodiment, the tubes have an end plate at each end. The end plates advantageously are able to maintain their shape under high inflation pressures.

The end plate(s) may be rigid
The end plates may comprise metal.

The end plates may include a clamping mechanism for clamping the braid tube of the inflatable longitudinal tubes thereto. This may control the maximum longitudinal extension of the inflatable longitudinal tubes. For example, the braid tube may be looped around a ring that is clamped between two spacers that are attached to an end plate.

The tubes and panels may be connected together by adhesive, welding or any other suitable connecting means.

The inflatable longitudinal tubes of each beam may be coupled together by a sleeve. The sleeve may be provided in addition to the adhesive (or welding or any other suitable connecting means).

The slide may further comprise a plurality of inflatable floor panels connected to said lateral lower beams.

The inflatable floor panels may comprise drop stitch material.

Each beam may comprise at least two inflatable longitudinal tubes, the tubes connected side by side and adjacent along their length.

The slide may further comprise a flexible chute for supporting people during their evacuation via the slide, said chute including a floor part extending between said two lateral lower beams and at least one partitioning wall extending between the floor part and the upper beam for defining at least two slide paths for the people during evacuation. In the embodiment two partitioning walls extend between the floor part and the upper beam for defining three slide paths for the people during evacuation.

### BRIEF DESCRIPTION OF THE DRAWINGS

For a better understanding of the present invention embodiments will now be described by way of example, with reference to the accompanying drawings, in which:
Figure 1 shows a side elevational view of a slide in accordance with an embodiment of the invention, extending between a ship and a lifeboat;
Figure 2A shows a perspective view of a slide in accordance with embodiment of the invention;
Figure 2B shows an overhead plan view of the slide of Figure 2A;
Figure 2C shows a side elevational view of the slide of Figure 2A;
Figure 2D shows a front elevational view of the slide of Figure 2A (viewed from the exit, life raft end);
Figure 2E shows a rear elevational view of the slide of Figure 2A (viewed from the entry, ship end);
Figure 2F shows a plan view of the underside of the slide of Figure 2A;
Figure 3A shows a close-up view of one arrangement of the upper beam of the slide;
Figure 3B shows an alternative arrangement of the upper beam of the slide;
Figure 3C shows an arrangement of a lateral beam of the slide;
Figure 3D shows a first arrangement of material strips for connecting the tubes of a beam of the slide;
Figure 3E shows a second arrangement of material strips for connecting the tubes of a beam of the slide;
Figure 4A shows a side elevational view of an inflatable side panel of the slide;
Figure 4B shows a perspective view of the side panel of Figure 4A;
Figure 4C shows a front elevational view of the side panel of Figure 4A;
Figure 5 shows a perspective view of a drop stitch material;
Figure 6A shows a side elevational view of a floor panel of the slide;
Figure 6B shows a perspective view of a floor panel of Figure 6A;
Figure 6C shows a front elevational view of the floor panel of Figure 6A;
Figure 7 shows a transverse cross-sectional view of one of the tubes used in upper or lateral beams of the slide;
Figure 8A shows a perspective view of a braid material used in the tubes of the beams of the slide;
Figure 8B shows a schematic view of the arrangement of a longitudinal element of the braid material;
Figure 9A shows a perspective view of a rigid end cap assembly provided at each end of the tubes;
Figure 9B shows the end cap assembly of Figure 9A in exploded form;
Figure 9C shows a rear elevational view of the end cap assembly of Figure 9A;
Figure 9D shows a side elevational view of the end cap assembly of Figure 9A;
Figure 9E shows a cross-section taken along the line A-A of Figure 9C;
Figure 9F shows an enlarged view of the encircled portion B of Figure 9E;
Figure 10A shows a perspective view of the end plate of the end cap assembly of Figure 9A;
Figure 10B shows rear elevational view of the end plate of Figure 10A;
Figure 10C shows a side elevational view of the end plate of Figure 10A;
Figure 10D shows a cross-section taken along the line A-A of Figure 10B;
Figure 10E shows an enlarged view of the encircled portion B of Figure 10D.
Figure 11A shows a perspective view of the outer spacer of the end cap assembly of Figure 9A;
Figure 11B shows a rear elevational view of the outer spacer of Figure 11A;
Figure 11C shows a side elevational view of the outer spacer of Figure 11A;
Figure 11D shows a cross-section taken along the line A-A of Figure 11B;
Figure 11E shows an enlarged view of the portion B of Figure 11D;
Figure 12A shows a perspective view of the clamp ring of the end cap assembly of Figure 9A;
Figure 12B shows an elevational view of the clamp ring of Figure 12A;
Figure 12C shows a cross-section taken along the lines A-A of Figure 12B.
Figure 13A shows a perspective view of the inner spacer of the end cap of Figure 9A;
Figure 13B shows a front elevational view of the inner spacer of Figure 13A;
Figure 13C shows a side elevational view of the inner spacer of Figure 13A;
Figure 13D shows a cross-section taken along the line A-A of Figure 13B;
Figure 13E shows an enlarged view of the encircled portion B of Figure 13D;
Figure 14 is a cross-sectional view of the inflation valve mounting; and
Figure 15 shows a close-up view of an alternative arrangement of the upper beam of the slide.

In the drawings, like elements are generally designated with the same reference sign.

### DETAILED DESCRIPTION OF EMBODIMENTS OF THE INVENTION

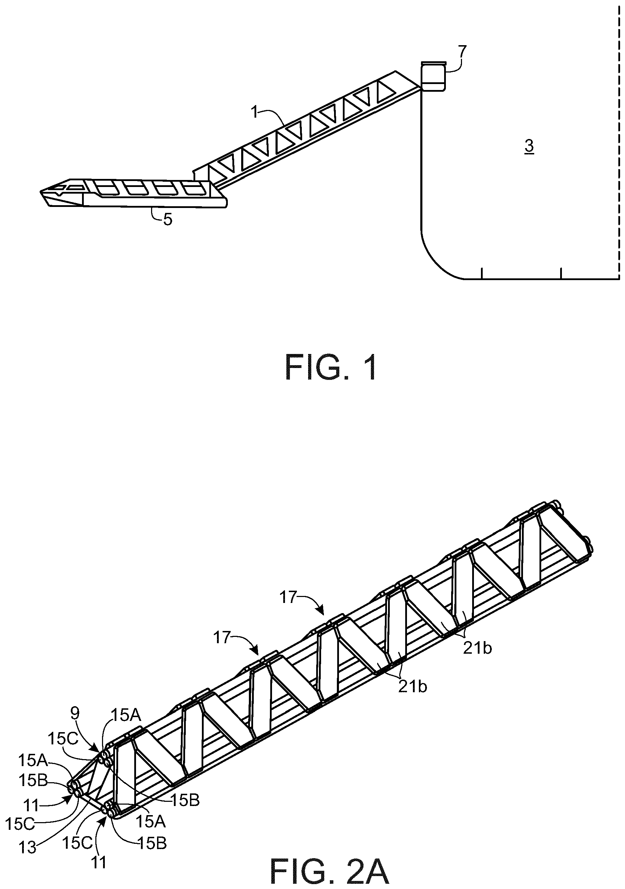

FIG. 1 shows an inflatable evacuation slide 1, in deployed and inflated configuration between a ship 3 and an inflatable survival life raft 5. The life raft 5 is deployed and inflated, and releasably attached to the lower or exit end of the slide 1 by deformable releasable slide/raft interface coupling devices. Although the inflatable evacuation slide 1 is deployed between a ship 3 and an inflatable survival life raft 5 in this embodiment, it should be understood that that the slide 1 can extend from between any two structures, such as inflatable structures, platforms, life rafts, e.g. an inflatable life raft, lifeboats etc.

The other end of the slide 1, which is its upper or entry end, is connected to a storage and launching cradle 7, mounted on the ship 3, for storing the assembly constituted by the slide 1, folded in a deflated state, and the life raft 5, also deflated and folded in a container (not shown), around which the slide 1 is wrapped in the storage configuration, before launching, on a deck of the ship 3.

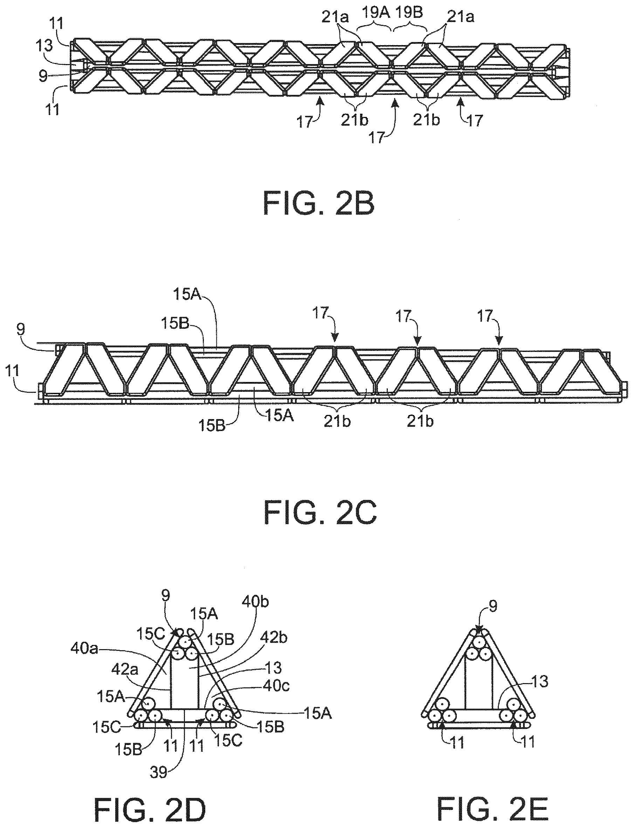

As shown on a larger scale in FIGS. 2A to 2E, the structure of the slide 1 comprises a framework including three longitudinal triple beams, one of which is an upper beam 9, in a substantially central position above the other two, which are lateral lower beams 11, between which is fixed and stretched over the whole length of the slide 1, a flexible chute 13.

Each of the three longitudinal triple beams 9 and 11 comprises three longitudinal tubes 15A-C, each in the form of an elongated cylinder having a substantially circular cross-section, individually inflatable (i.e. each inflatable independently of the others), stacked one (15A) above the other two (15B, 15C) so that they are tangential two by two over their length, and thus connected together adjacent and side by side. The tubes 15A-C may be connected intermittently or continuously over their length, for example by an adhesive or by high-frequency welding, so that the cross-section of each beam 9 or 11 has substantially the shape of an equilateral triangle in the inflated state.

Although in the embodiment longitudinal beams 9 and 11 each comprise three longitudinal tubes 15A-C are provided, it should be understood that the beams 9 and 11 may comprise only a single longitudinal tube or any number of longitudinal tubes.

The framework of the slide 1 also comprises a plurality of stiffening modules 17, which are inflatable, but pneumatically and mechanically independent of each other, and arranged side by side at their base, from the entry end to the exit end of the slide 1, and each mechanically connected to the longitudinal tubes 15A-C of the longitudinal beams 9 and 11 by connection means, and inflated from the longitudinal tubes 15A-C of the longitudinal beams 9 and 11 by inflation means, so that, in the inflated state of the slide 1, they can brace and stay the beams 9 and 11, keeping them spaced apart transversally to their length, and so that they extend substantially parallel to each other, in order to give the inflated slide 1 a cross-section (perpendicular to the beams 9 and 11) having substantially the shape of an isosceles or equilateral triangle.

Each stiffening module 17 includes two symmetrical halves 19a and 19b (Figure 2B), each being composed of two inflatable side panels 21a, b connected together at the top, before assembly of the two halves. As the two symmetrical halves 19a and 19b are identical to each other, and arranged face to face, it is sufficient to describe one of them.

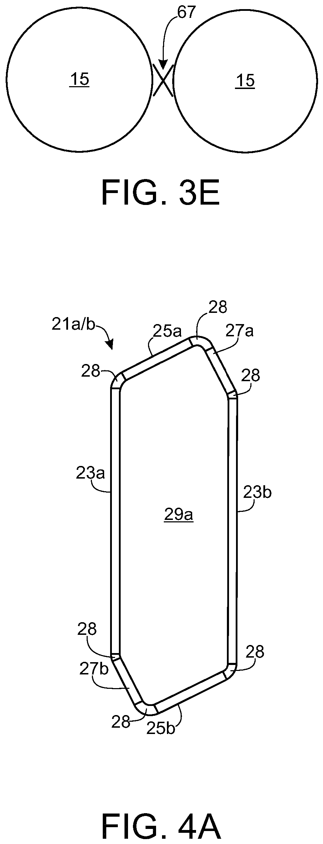

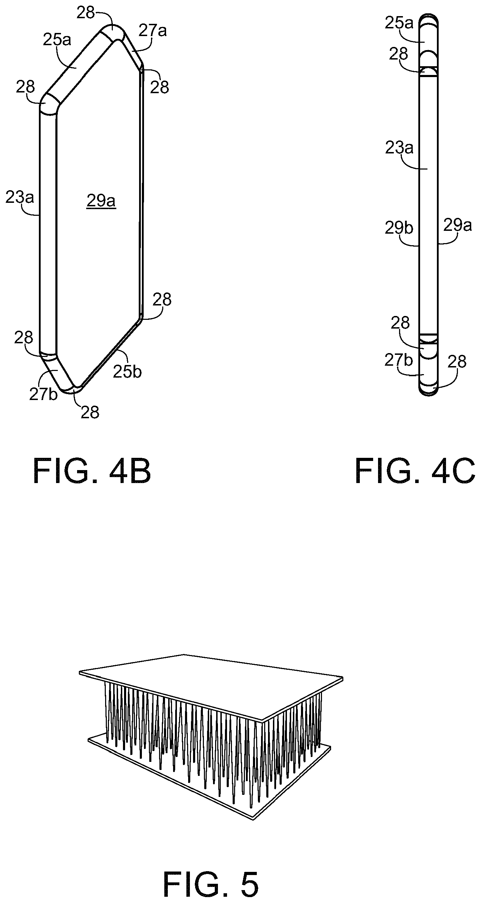

Each of the side panels 21a/b has a generally hexagonal shape, as shown in Figures 4A-4C. The side panel 21a/b has two oppositely facing long side walls 23a, b, identical to each other, two oppositely facing intermediate length side walls 25a, b, identical to each other, and two oppositely facing short side walls 27a, b, also identical to each other. A corner connector 28 joins each two adjacent side walls. The side walls extend between two opposite faces 29a, b of the side panel 21a/b

The side panels 21a and 21b of each half 19a and 19b of the stiffening module are joined to each other at the upper ends at the intermediate side walls 25a.

The side panels 21a/b are formed from drop stitch (or drop thread) material, which has the general form shown in Figure 5. In such a material, thousands of (e.g. nylon) threads connect the two opposite faces 29a, 29b to keep side panels 21a and 21b in the desired shape when inflated and to provide rigidity.

Each stiffening module 17 has, in the inflated state, the general outer shape of a hollow truncated pyramid with a square or rectangular base, the inclined edges of which are formed by two pairs of side panels 21a, 21b thus comprising four independent inflatable structures.

Although the stiffening modules 17 are not mechanically coupled to each other, or connected to each other by inflation means, each of them is however connected to longitudinal tubes 15A-C of the three longitudinal beams 9 and 11 by connection means, as well as optionally to some of the longitudinal tubes 15A-C of these beams 9 and 11 by inflation means. However, it is preferred that the stiffening modules 17 and the longitudinal tubes 15A-C are inflated separately.

Each of the four independent inflatable side panels 21a and 21b of each of the stiffening modules 17 may be connected to inflation means, and, moreover, with respect to any pair of two immediately adjacent stiffening modules 17, a majority of independent inflatable side panels 21a and 21b of one of these two modules is connected to inflation means that are different from those to which the homologous inflatable structures of the other one of these two modules are connected.

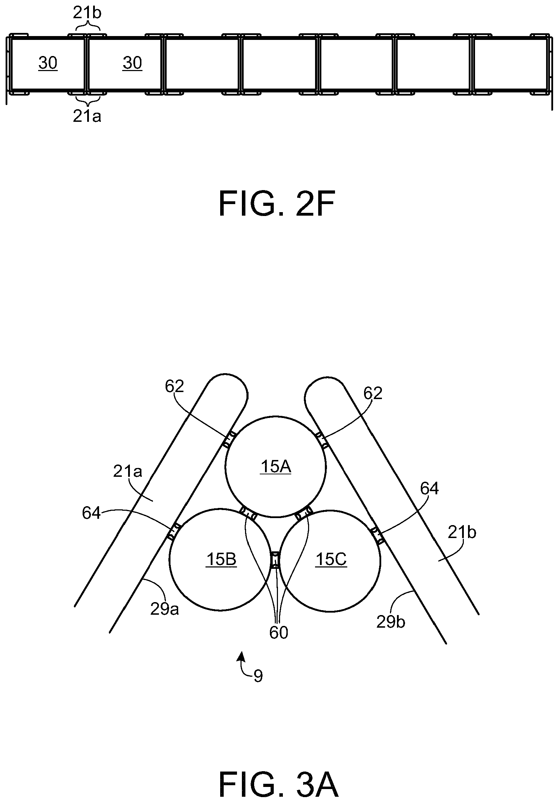

The base of the slide 1 (Figure 2F) comprises a plurality of abutting but independent floor panels 30. The floor advantageously provides a smooth flat surface.

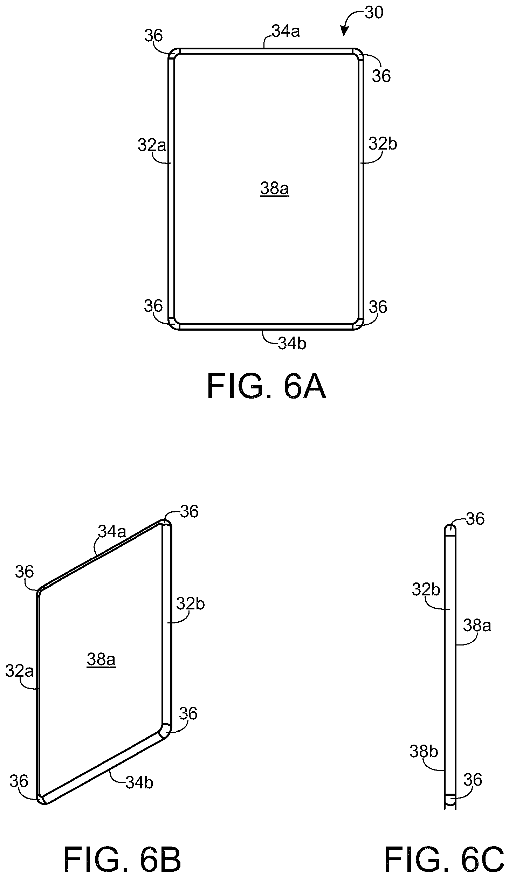

Each of the floor panels 30 has a generally rectangular shape, as shown in Figures 6A-6C. The panel 30 has two oppositely facing long side walls 32a, b, identical to each other, and two oppositely facing short side walls 34a, b, also identical to each other. A corner connector 36 joins each two adjacent side walls. The side walls extend between two opposite faces 38a, b of the panel 30.

The adjacent floor panels 30 of abut each other at the upper ends at the short sides walls 34a, b.

The floor panels 30 are formed from drop stitch (or drop thread) material, which has the general form shown in Figure 5. In such a material, thousands of (e.g. nylon) threads connect the two opposite faces 38a, 38b to keep the floor panel in the desired shape when inflated and to provide rigidity. The air gap between the opposite faces 38a, 38b also provides thermal insulation.

The bottom of the slide 1, at its exit end, comprises a downstream end that is connectable to the life raft 5 (or other structure).

Referring now to Figure 3A, the arrangement of the inflatable tubes 15A-C that form the upper beam 9 is shown. Each of the tubes is connected to the two adjacent tubes by adhesive 60 which is applied preferably along the entire length of each of the tubes over a portion of the circumference of the tube that will abut the two adjacent tubes. The adhesive 60 connects the tubes 15A-C together to form a generally triangular structure, with the tube 15A sitting above the two lower tubes 15B and 15C. The upper beam 9 formed by the tubes is connected to the inflatable side panels 21a, b of each stiffening module 17 by adhesive, as shown in Figure 3A. In particular, the upper tube 15A has two regions of adhesive 62 provided preferably along the entire length of the tube in a region that contacts the interior faces 29a and 29b of oppositely facing inflatable side panels 21a and 21b. Each of the lower tubes 15B and 15C includes a region of adhesive 64 extending preferably along its entire length in the region that comes into contact with the interior faces 29a and 29b.

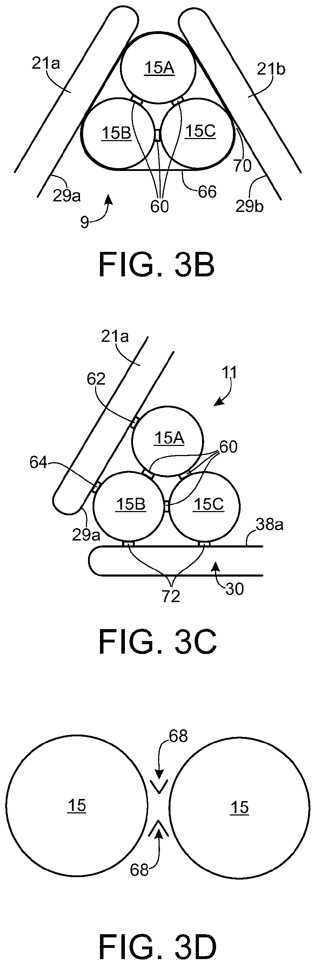

As an alternative to the direct connection between the adjacent tubes, and interior faces 29a, 29b, a strip or strips of material may extend between these elements and be adhered to adjacent ones of the elements by adhesive. Figure 3D shows a "large mounting" form of such strips of material, comprising a two spaced apart V-shaped strips 68, the limbs of which are adhered to adjacent tubes 15 (i.e. two of tubes 15A/B/C). Figure 3E shows a "small mounting" form of such a strip of material, comprising an X-shaped strip 67, the limbs of which are adhered to adjacent tubes 15 (i.e. two of tubes 15A/B/C). The "X" may be formed by two stitched together pieces of material).

A further alternative arrangement of the upper beam 9 is shown in Figure 3B. The arrangement of the tubes 15A-C is the same as in Figure 3A. However, a beam sleeve 66 is fixed around the tubes 15A-15C in order to hold the tubes together (in addition to the adhesive 60). In this embodiment, an adhesive region which preferably extends along the entire length of the upper tube 9 secures the outer face 70 of the beam sleeve 66 to the inner faces 29a and 29b of the side panels 21a and 21b. A continuous beam sleeve 66 may be provided along the length of the upper beam 9.

Rather than directly coupling the tubes 15A-15C together by adhesive 60, as shown in Figure 3B, a material strip arrangement may also be provided, as described in relation to Figures 3D and 3E.

Figure 3C shows the arrangement of a lateral lower beam 11. The tubes 15A-15C of the lower beam 11 are connected to each other by adhesive 60, in the same way as shown in Figure 3A (although material strips could be used alternatively as described in relation to Figures 3D and 3E). The tubes 15A and 15B are connected to the face 29a of the side panel 21a by adhesive region 62 and 64, respectively, in the same manner as described in relation to Figure 3A (although material strips could alternatively be used). The tubes 15B and 15C are connected to the inner face 38a of the floor panel 30 by adhesive regions 72 which preferably extend along the entire length of the tubes 15B and 15C round a portion of the circumference thereof that is adjacent to the floor panel 30 (although material strips could alternatively be used).

As in Figure 3B, a beam sleeve may be fitted around the tubes 15A-15C of a lateral lower beam 11 to secure them together.

With regard to coupling the slide 1 by its upper end to the storage cradle 7 mounted on the ship 3, this can be carried out as in the rescue equipment of the state of the art. However, the rescue equipment of the embodiment preferably comprises a storage and launching cradle 7 for the assembly constituted by a container, containing at least one life raft such as 5 and its inflation means, and the slide 1 wrapped around the container.

The chute 13 has a generally flat floor 39 formed of flexible material that extends between the lateral lower beams 11 over the whole length of the slide 1. In order to increase the speed of evacuation via the slide 1, it is advantageous to subdivide the chute 13 into three adjacent tracks 40a and 40b and 40c (as best seen Figures 2A, 2D and 2E) by a flexible separating partitions 42a and 42b supporting the mid part of the chute floor 39 and suspended from the upper beam 9, over the whole length of the slide 1. The separating partitions 42a and 42b may be formed by a netting material. This variant is advantageous for ships carrying a large number of passengers.

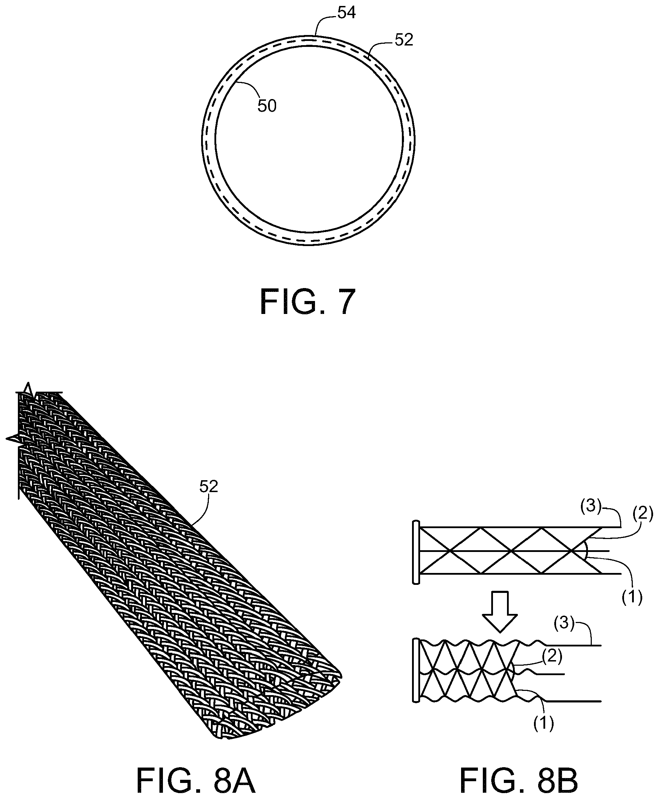

In the embodiments of the invention each inflatable tube 15A-C is constructed from a bladder 50 and a surrounding braid tube 52. Figure 8A shows a biaxial braid tube 52, having two intertwined strands of inextensible material, each extending at an angle inclined to the central, longitudinal axis of the tube. Preferably, the braid tube used in the embodiments has an additional, third element that extends substantially parallel to the longitudinal axis of the tube that constrains longitudinal extension of the tube (so that the tube has a predetermined maximum length when inflated). The longitudinal elements may be fibres, filaments, ropes or webbings etc. The longitudinal elements may be attached to a biaxial braid tube to constrain longitudinal extension of the tube. Alternatively, the longitudinal elements may be integrated into the braid tube to form a triaxial braid tube, which is a tube formed by intertwining three strands of an inextensible material, the third strand extending longitudinally, substantially parallel to the central axis of the tube.

The arrangement of the third elements (3) is shown in Figure 8B. The third elements (3) extend axially, in contrast to the biaxial fibres (2) to which they are attached. The scissor angle (1) is selected in the uninflated state to be large enough so that, at maximum radial extension (when in the inflated state), the third elements (3) constrain the maximum longitudinal extension,

The strands of an inextensible material forming the braid may be Vectran® (formed from a liquid crystal polymer, LCP), Kevlar®, or other aramids, polyesters or Ultra-high-molecular-weight polyethylenes (UHMWPEs).

The bladder 50 can be formed integrally with the braid tube 52 by, for example by coating the braid tube 52 with a flexible polymeric material such as silicone or a flexible plastic such as polyurethane, or neoprene. Alternatively (as shown) the braid tube 52 can retain within it a sealed bladder 50 made from a flexible material such as silicone or polyurethane or a synthetic rubber or neoprene. It is preferred to use a polyurethane or silicone or synthetic rubber or neoprene bladder 50 within the braid tube 52 that is made "over size" having a length that is at least as long as the maximum length of the braid 52 and a diameter that is at least as large as the maximum diameter of the braid tube 52 when expanded. In this way, the bladder 50 is unstressed as it fills and empties.

That is, although the bladder 50 may be of generally the same shape as the braid tube 52, the bladder 50 may be of generally larger size. The bladder 50 may be made of a sufficiently large size so that, when inflated within the braid tube 52, the bladder 50 fills the internal volume of the braid 52 without any stretching of the bladder 50 occurring, and the tension is taken up by the braid tube 52. If the bladder 50 is made oversized, the bladder may be made of an inextensible and/or inelastic material. It is advantageous for the tension to be taken up by the braid tube 52, as it is stronger than the bladder.

When the braid tube 52 and the bladder 50 are separate, there may be relative movement between the braid tube 52 and the bladder 50. In order to reduce wear on the bladder 50 from such relative movement, the braid may be formed or coated with a low friction material. Alternatively, a low friction material could be placed between the braid tube 52 and the bladder 50. The bladder 50 could be formed with a double skin with a lubricant between the two skins.

The bladder 50 may be elastic but this is not essential.

The bladder 50 and braid tube 52 are preferably contained within a protective outer bladder sleeve 54. The outer bladder sleeve 54 protects the braid 52 from damage. The outer bladder sleeve 54 also allows the inflatable tubes 15A-C to be glued to other parts of the slide 1 (it is not possible to reliably attach braid 52 by glue).

The use of braid 52 in the tubes 15A-15C allows the tubes to be inflated to much higher pressure than was previously possible. Pressures of 100psi and above are possible.

The combination of the drop stitch panels 21a/b, 30 and the braid 52 in the tubes 15A-15C is highly advantageous. The rigidity of the drop stitch panels (and particularly their ability to resist deformation in response to shear stress) resists the bending/collapse of the inflatable beams 9 and 11, and provides a significant advantage over the prior art.

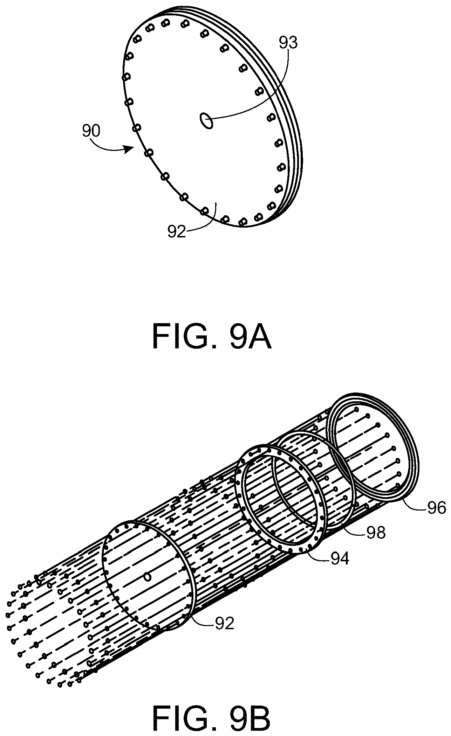

The tubes 15A-15C are provided at each end with a rigid end cap assembly as shown in the assembled form in Figure 9A and in exploded form in Figure 9B. The end cap assembly 90 includes an outer, generally circular end plate 92 having an aperture 93 formed therein for mounting an inflation valve. A circular outer spacer 94 and a circular inner spacer 96 are provided either side of a clamp ring 98. The end plate 92, outer spacer 94 and inner spacer 96 are fixed together by a plurality of nuts and bolts.

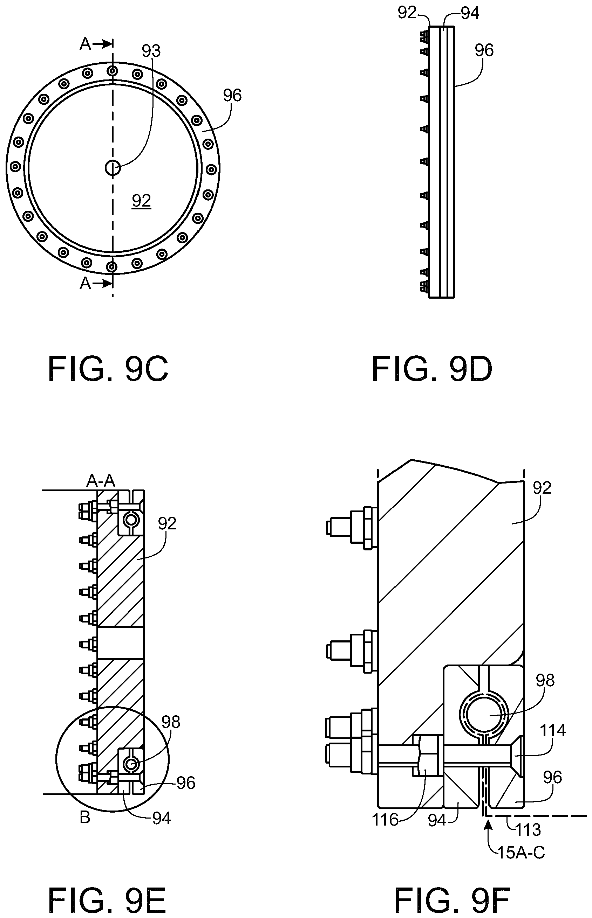

A rear elevational view of the end cap assembly 90 is shown in Figure 9C. A side elevational view of the end cap assembly 90 is shown in Figure 9D. Figure 9E shows a cross-section taken along the line A-A of Figure 9C. Figure 9F shows an enlarged view of the end circled portion B of Figure 9E.

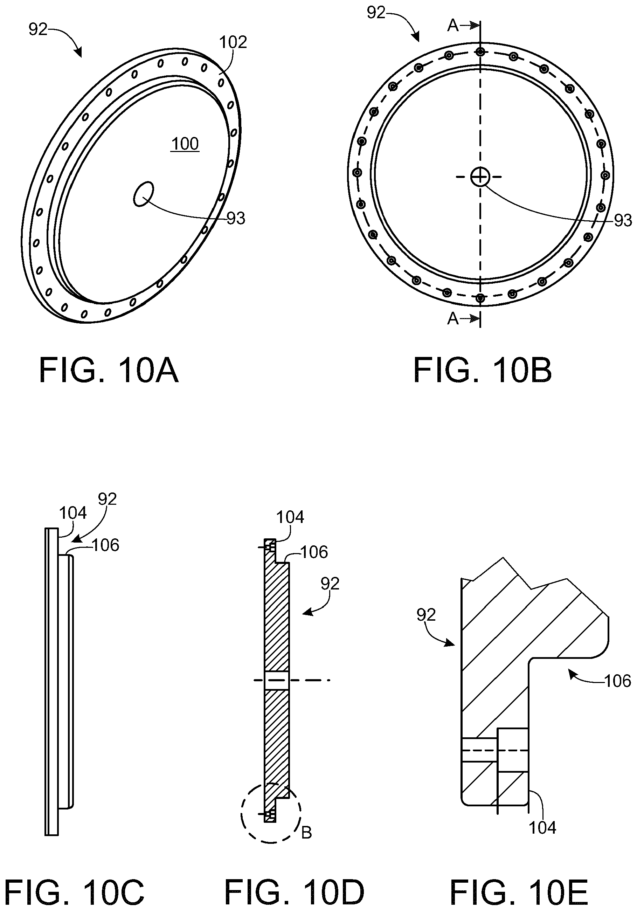

Figure 10A shows a perspective view of the end plate. Figure 10B shows a rear elevational view of the end plate 92. Figure 10C shows a side elevational view of the end plate 92. Figure 10D shows a cross-section taken along the line A-A of Figure 10B. Figure 10E shows an enlarged view of the encircled portion B of Figure 10D.

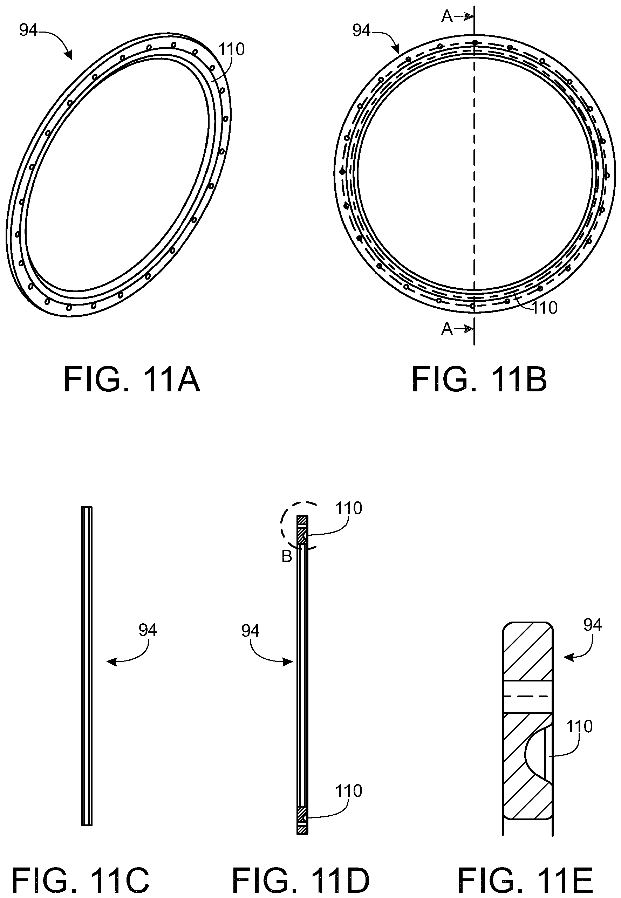

Figure 11A shows a perspective view of the outer spacer. Figure 11B shows an inward plan view of the outer spacer 94. Figure 11C shows a side elevational view of the outer spacer 94. Figure 11D shows a cross-section taken along the line A-A of Figure 11B. Figure 11E shows an enlarged view of the portion B of Figure 11D.

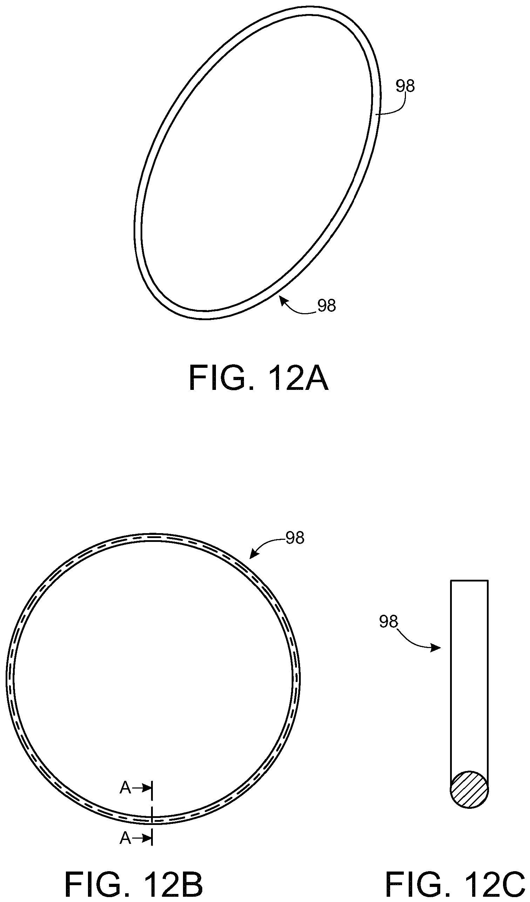

Figure 12A shows a perspective view of the clamp ring 98. Figure 12B shows a plan view of the clamp ring 98. Figure 12C shows a cross-section taken along the lines A-A of Figure 12B.

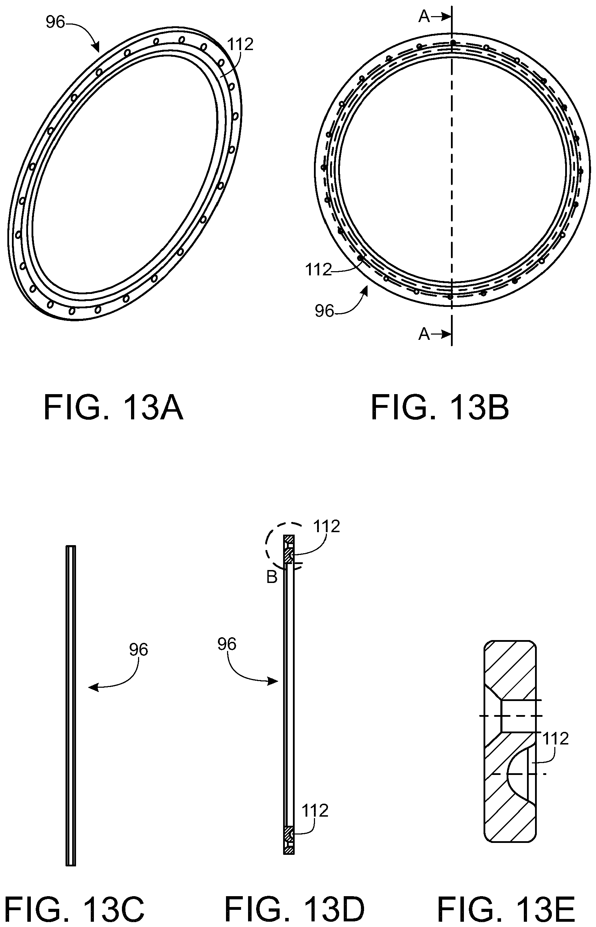

Figure 13A shows a perspective view of the inner spacer 96. Figure 13B shows front elevational view of the inner spacer 96. Figure 13C shows a side elevational view of the inner spacer 96. Figure 13D shows a cross-section taken along the line A-A of Figure 13D. Figure 13E shows an enlarged view of the encircled portion B of Figure 13D.

The end plate 92 includes an inner, generally cylindrical portion 100 having a greater thickness in the longitudinal direction of the tube than the outer, generally annular portion 102. The difference in thicknesses results in a circumferential flange 104 being formed around the periphery of the end plate, providing a recess 106 for receiving the inner and outer spacers 94 and 96, and the clamp ring 98 (see, for example, Figure 9F). The outer spacer 94 is of generally annular form such that it can be accommodated within the recess 104 of the end plate 92, as is the inner spacer 96. The outer spacer 94 includes a circumferential recess 110 (see, for example, Figure 11E), which is of generally semi-circular cross-section. The inner spacer 96 includes a corresponding circumferential recess 112 (see, for example, Figure 13E) which is also of generally semi-circular cross-section. When assembled, the outer 94 and inner 96 spacers face each other such that their recesses 110 and 112 face one another in order to define a generally circular space for accommodating the clamp ring 98 (as best shown in Figure 9F).

A purpose of the end cap assembly 90 is to provide a strong attachment point for each of the opposite ends of the tubes 15A-15C (as they are carrying the forces). The material 113 of the tubes 15A-15C is shown by a dash line in Figure 9F. At each end of the tubes the material 113 is wrapped around the clamp ring 98. The clamp ring 98, together with the wrapped around material 113 of the tube is then placed in the recesses 110 and 112 of the outer and inner spacers 94 and 96. A bolt 114 fastens the outer spacer 94 to the inner spacer 96 to one another, thereby clamping the clamp ring 98 and the material 113 between the spacers. The bolt 114 cooperates with nut 116 to additionally secure the spacers 94 and 96 to the end plate 92. The bolt is tightened sufficiently to provide an air-tight seal.

The material 113 of the tube 15A-15C may comprise each of the layers of the tube which, as describe with reference to Figure 7, and so may include the bladder 50, the braid 52 and the outer bladder sleeve 54. Such an arrangement is applicable to a tube where the bladder 50 is formed integrally with the braid tube. In such an arrangement the end cap assembly 90 may provide an air-tight seal.

However, in a preferred embodiment, the material 113 of the tube 15A-15C comprises the braid tube 52 (and optionally the outer bladder sleeve 54). In such an arrangement the bladder has its volume constrained radially by the braid tube 52, and longitudinally the end cap assemblies 90 - for which the maximum separation is advantageously controlled by the resistance to longitudinal extension of the braid tube 52.

The floor panels 30 may each be inflated by a gas connection with one of the tubes 15A-15C of lower beams 11. However, it is preferred that the floor panels 30 are inflated by a different gas connection to the tubes 15A-15C. Advantageously, the floor panels 30 are inflated in parallel, but adjacent panels are inflated by gas from different gas connectors.

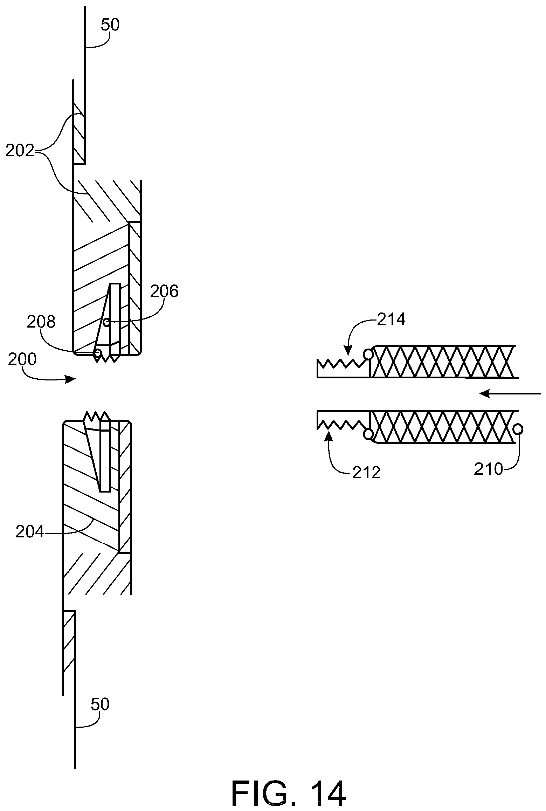

Figure 14 shows an example arrangement at one end of a bladder 50. An end opening 200 of the bladder 50 is partially closed by e.g. PU glue 202 and e.g. neoprene glue 204. Embedded within the neoprene glue 204 is an e.g. neoprene moulding 206 into which is fitted a metal female tread insert 208. To inflate the bladder a high pressure hose 210 having a male treaded portion 212 is screwed into the female tread insert 208 and sealed thereto by O-ring 214. The hose 210 may pass through the aperture 93 in the end plate 92. It should be understood that this is just one example of an inflation arrangement for the bladder, and many alternatives may be used.

Preferably the longitudinal beams 9 and 11 are be inflated independently from the side panels 21a, 21b (and are not connected via an inflation means) as beams 9 and 11 are inflated up to 100 psi SWP (Safe Working Pressure) whereas the side panels 21a, 21b are only inflated up to 10 psi SWP. However, it should be understood that this is merely one inflation arrangement and the invention is not restricted to any particular type of inflation arrangement.

An ambient venturi valve may be used to augment high pressure inflation to provide an initial fill of the tubes 15A-15C (and the connected panels). This is where a high-pressure gas supply (e.g. from a cylinder) will be augmented by air being drawn in through a venturi valve arrangement. The gas used to inflate the tubes 15A-15C (and the connected panels) preferably comes from a gas supply system on the vessel 3, provided by e.g. compressors, air pumps, charged gas cylinders, chemical gas generators etc.

The use of the braid 52 in the tubes 15A-15C provides for great strength, and allows the tubes to be inflated at very high pressure, so the tubes, when inflated, are highly rigid. The end cap assemblies 90 are configured to work effectively at the high pressures used to inflate the bladders 50 within the braided tubes. The configuration of the tubes in three multiple groups (in the embodiment, groups of three), further enhances rigidity of the slide 1, and also provides redundancy in the event that a tube should become damaged. Further, the use of drop stitch material in the side panels 21a, b and the floor panels 30 allows these panels to withstand high inflation pressures whilst maintaining the desired shape as shown in the drawings and rigid surfaces.

In an alternative embodiment, two or more bladders 50 may be enclosed in a single braid tube 52. This provides redundancy, so that, should one of the bladders 50 burst, the remaining bladder(s) are able to fill the space within the braid tube 52.

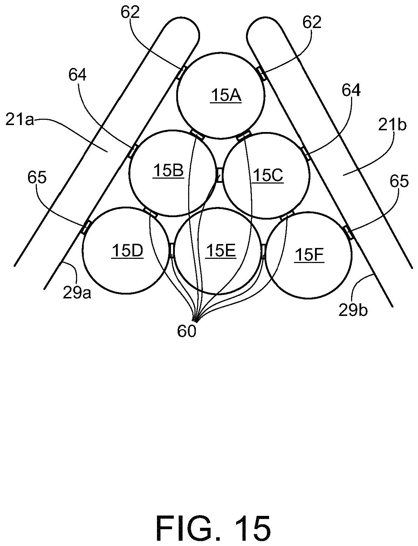

In the embodiments described above, each of the three longitudinal triple beams 9 and 11 comprises three longitudinal tubes 15A-C. Figure 15 shows an alternative arrangement in which each of the three longitudinal triple beams 9 and 11 comprises six longitudinal tubes 15A-F, each in the form of an elongated cylinder having a substantially circular cross-section, individually inflatable (i.e. each inflatable independently of the others), stacked one (15A) above two (15B, 15C) and two (15B, 15C) above three (15D, 15E, 15 F) so that they are tangential two by two over their length, and thus connected together adjacent and side by side. The tubes 15A-F may be connected intermittently or continuously over their length, for example by an adhesive or by high-frequency welding, so that the cross-section of each beam 9 or 11 has substantially the shape of an equilateral triangle in the inflated state. Figure 15 shows the upper beam 9. The lower beams 11 may have the same general configuration of the upper beam 9.

Each of the tubes is connected to the two adjacent tubes by adhesive 60 which is applied preferably along the entire length of each of the tubes over a portion of the circumference of the tube that will abut the two adjacent tubes. The adhesive 60 connects the tubes 15A-F together to form a generally triangular structure, with the tube 15A sitting above the two middle tubes 15B and 15C, and the two middle tubes 15B and 15C sitting above the three lower tubes 15D, 15E and 15F. The upper beam 9 formed by the tubes is connected to the inflatable side panels 21a, b of each stiffening modules 17 by adhesive 60, as shown in Figure 15. In particular, the upper tube 15A has two regions of adhesive 62 provided preferably along the entire length of the tube in a region that contacts the interior faces 29a and 29b of oppositely facing inflatable side panels 21a and 21b. Each of the middle tubes 15B and 15C includes a region of adhesive 64 extending preferably along its entire length in the region that comes into contact with the interior faces 29a and 29b. Each of the three lower tubes 15D, 15E and 15F includes a region of adhesive 65 extending preferably along its entire length in the region that comes into contact with the interior faces 29a and 29b.

As an alternative to the direct connection between the adjacent tubes, and interior faces 29a, 29b, a strip or strips of material may extend between these elements and be adhered to adjacent ones of the elements by adhesive in a similar manner to that shown in Figure 3D or Figure 3E.

A beam sleeve, similar to that shown at 66 in Figure 3B, may be fixed around the tubes 15A-15E in order to hold the tubes together (in addition to the adhesive 60).

The slide 31 may be of significant length, such as 47 metres, and it will be appreciated by those skilled in the art that a slide of such a length requires a significant rigidity in order to avoid sagging.

## Claims

1. An inflatable evacuation slide (1) for evacuating people from a first structure (3) to a second structure (5), the slide (1) comprising:
at least three longitudinal beams, including two lateral lower beams (11) and an upper beam (9), spaced apart transversally over their length and substantially parallel to each other in the inflated state, each beam (9,11) comprising at least one inflatable longitudinal tube (15A-C);
**characterized by**
a plurality of inflatable lateral panels (21a, b) connected to said upper beam (9) and to said lateral lower beams (11);
wherein the inflatable lateral panels (21a, b) comprise drop stitch material.

2. The slide of claim 1, wherein the inflatable longitudinal tube (15A-C) comprises a braid tube (52).

3. The slide of claim 2, wherein the braid tube (52) is formed of a plurality of substantially inelastic fibres.

4. The slide of claim 3, wherein the braid tube (52) includes at least one longitudinally extending element for constraining the maximum longitudinal extension of the braid tube.

5. The slide of claim 1, 2, 3 or 4, wherein each of the inflatable longitudinal tubes (15A-C) include at least one end plate (92) positioned at an end of the tube (15A-C).

6. The slide of claim 5, wherein the end plate (92) comprises metal.

7. The slide of claim 5 or 6, when dependent on claim 2, wherein the end plates (92) include a clamping mechanism (98) for clamping the braid tube (52) of the inflatable longitudinal tubes (15A-C) thereto.

8. The slide of any one of claim 1 to 7, wherein the inflatable longitudinal tubes (15A-C) of each beam are coupled together by a sleeve (166).

9. The slide of any one of claim 1 to 8, further comprising a plurality of inflatable floor panels (30) connected to said lateral lower beams (11).

10. The slide of 9, wherein the inflatable floor panels (30) comprise drop stitch material.

11. The slide of any one of claim 1 to 10, further comprising a flexible chute (13) for supporting people during their evacuation via the slide, said chute (13) including a floor part (39) extending between said two lateral lower beams (11) and at least one partitioning wall (42a, 42b) extending between the floor part (39) and the upper beam (9) for defining at least two slide paths (40a, 40b, 40c) for the people during evacuation.

12. The slide of any one of claim 1 to 11, wherein each beam comprises at least two inflatable longitudinal tubes (15A-C), said tubes (15A-C) connected side by side, and adjacent along their length.

13. The slide of any one of claim 2 to 12, wherein the inflatable longitudinal tubes (15A-C) comprise an inflatable bladder (50), the volume of which is constrained by the braid tube (52).

14. The slide of any one of claim 2 to 13, wherein the braid tube (52) is contained in a sleeve (54) suitable for being adhesively connected to the inflatable lateral panels (21a,b).

## Patentansprüche

1. Aufblasbare Evakuierungsrutsche (1) zum Evakuieren von Personen aus einer ersten Struktur (3) zu einer zweiten Struktur (5), wobei die Rutsche (1) umfasst:
mindestens drei Längsträger, darunter zwei seitliche untere Träger (11) und ein oberer Träger (9), die quer über ihre Länge voneinander beabstandet und im aufgeblasenen Zustand im Wesentlichen parallel zueinander sind, wobei jeder Träger (9, 11) mindestens einen aufblasbaren Längsschlauch (15A-C) umfasst;
**gekennzeichnet durch**
eine Vielzahl von aufblasbaren Seitenplatten (21a, b), die mit dem oberen Träger (9) und den seitlichen unteren Trägern (11) verbunden sind;
wobei die aufblasbaren Seitenplatten (21a, b) aus Drop-Stitch-Material bestehen.

2. Rutsche gemäß Anspruch 1, wobei der aufblasbare Längsschlauch (15A-C) aus einem Flechtschlauch (52) besteht.

3. Rutsche gemäß Anspruch 2, wobei der Flechtschlauch (52) aus einer Vielzahl von im Wesentlichen unelastischen Fasern gebildet ist.

4. Rutsche gemäß Anspruch 3, wobei der Flechtschlauch (52) mindestens ein sich in Längsrichtung erstreckendes Element zum Begrenzen der maximalen Längserstreckung des Flechtschlauchs aufweist.

5. Rutsche gemäß Anspruch 1, 2, 3 oder 4, wobei jeder der aufblasbaren Längsschläuche (15A-C) mindestens eine Endplatte (92) aufweist, die an einem Ende des Schlauchs (15A-C) angeordnet ist.

6. Rutsche gemäß Anspruch 5, wobei die Endplatte (92) aus Metall besteht.

7. Rutsche gemäß Anspruch 5 oder 6 bei Abhängigkeit von Anspruch 2, wobei die Endplatten (92) einen Klemmmechanismus (98) zum Festklemmen des Flechtschlauchs (52) der aufblasbaren Längsschläuche (15A-C) daran aufweisen.

8. Rutsche gemäß einem der Ansprüche 1 bis 7, wobei die aufblasbaren Längsschläuche (15A-C) jedes Trägers durch eine Hülse (166) miteinander verbunden sind.

9. Rutsche gemäß einem der Ansprüche 1 bis 8, ferner umfassend eine Vielzahl von aufblasbaren Bodenplatten (30), die mit den seitlichen unteren Trägern (11) verbunden sind.

10. Rutsche gemäß 9, wobei die aufblasbaren Bodenplatten (30) aus Drop-Stitch-Material bestehen.

11. Rutsche gemäß einem der Ansprüche 1 bis 10, ferner umfassend eine flexible Rutsche (13) zum Tragen von Personen während ihrer Evakuierung über die Rutsche, wobei die Rutsche (13) einen Bodenteil (39), der sich zwischen den beiden seitlichen unteren Trägern (11) erstreckt, und mindestens eine Trennwand (42a, 42b) aufweist, die sich zwischen dem Bodenteil (39) und dem oberen Träger (9) erstreckt, um mindestens zwei Rutschbahnen (40a, 40b, 40c) für die Personen während der Evakuierung zu definieren.

12. Rutsche gemäß einem der Ansprüche 1 bis 11, wobei jeder Träger mindestens zwei aufblasbare Längsschläuche (15A-C) umfasst, wobei die Schläuche (15A-C) nebeneinander verbunden sind und entlang ihrer Länge aneinander angrenzen.

13. Rutsche gemäß einem der Ansprüche 2 bis 12, wobei die aufblasbaren Längsschläuche (15A-C) eine aufblasbare Blase (50) umfassen, deren Volumen durch den Flechtschlauch (52) begrenzt wird.

14. Rutsche gemäß einem der Ansprüche 2 bis 13, wobei der Flechtschlauch (52) in einer Hülse (54) enthalten ist, die geeignet ist, mit den aufblasbaren Seitenplatten (21a, b) verklebt zu werden.

## Revendications

1. Toboggan d'évacuation gonflable (1) destiné à évacuer des personnes d'une première structure (3) à une deuxième structure (5), le toboggan (1) comprenant :
au moins trois longerons longitudinaux, dont deux longerons latéraux inférieurs (11) et un longeron supérieur (9), espacés transversalement sur leur longueur et sensiblement parallèles les uns aux autres à l'état gonflé, chaque longeron (9, 11) comprenant au moins un tube longitudinal gonflable (15A-C) ;
**caractérisé par**
une pluralité de panneaux latéraux gonflables (21a,b) assemblés audit longeron supérieur (9) et auxdits longerons latéraux inférieurs (11) ;
dans lequel les panneaux latéraux gonflables (21a,b) comprennent un matériau à mailles coulées.

2. Toboggan de la revendication 1, dans lequel le tube longitudinal gonflable (15A-C) comprend un tube tressé (52) .

3. Toboggan de la revendication 2, dans lequel le tube tressé (52) est constitué d'une pluralité de fibres sensiblement inélastiques.

4. Toboggan de la revendication 3, dans lequel le tube tressé (52) comporte au moins un élément s'étendant longitudinalement destiné à limiter l'extension longitudinale maximale du tube tressé.

5. Toboggan de la revendication 1, 2, 3 ou 4, dans lequel chacun des tubes longitudinaux gonflables (15A-C) comporte au moins une plaque d'extrémité (92) positionnée à une extrémité du tube (15A-C).

6. Toboggan de la revendication 5, dans lequel la plaque d'extrémité (92) comprend du métal.

7. Toboggan de la revendication 5 ou 6, lorsqu'elles sont dépendantes de la revendication 2, dans lequel les plaques d'extrémité (92) comportent un mécanisme de serrage (98) destiné à serrer contre elles le tube tressé (52) des tubes longitudinaux gonflables (15A-C).

8. Toboggan de l'une quelconque des revendications 1 à 7, dans lequel les tubes longitudinaux gonflables (15A-C) de chaque longeron sont couplés ensemble par un manchon (166).

9. Toboggan de l'une quelconque des revendications 1 à 8, comprenant en outre une pluralité de panneaux de plancher gonflables (30) assemblés auxdits longerons latéraux inférieurs (11).

10. Toboggan de la revendication 9, dans lequel les panneaux de plancher gonflables (30) comprennent un matériau à mailles coulées.

11. Toboggan de l'une quelconque des revendications 1 à 10, comprenant en outre une glissière souple (13) destinée à supporter des personnes pendant leur évacuation par le toboggan, ladite glissière (13) comportant une partie de plancher (39) s'étendant entre lesdits deux longerons latéraux inférieurs (11) et au moins une paroi de séparation (42a, 42b) s'étendant entre la partie de plancher (39) et le longeron supérieur (9) pour définir au moins deux chemins de glissement (40a, 40b, 40c) pour les personnes pendant une évacuation.

12. Toboggan de l'une quelconque des revendications 1 à 11, dans lequel chaque longeron comprend au moins deux tubes longitudinaux gonflables (15A-C), lesdits tubes (15A-C) étant assemblés côte à côte, et adjacents sur leur longueur.

13. Toboggan de l'une quelconque des revendications 2 à 12, dans lequel les tubes longitudinaux gonflables (15A-C) comprennent une vessie gonflable (50), dont le volume est limité par le tube tressé (52).

14. Toboggan de l'une quelconque des revendications 2 à 13, dans lequel le tube tressé (52) est contenu dans un manchon (54) approprié pour être assemblé par adhésif aux panneaux latéraux gonflables (21a,b).
